# EUROPÄISCHE PATENTSCHRIFT

(11) **EP 3 602 964 B1**
(45) Veröffentlichungstag und Bekanntmachung des Hinweises auf die Patenterteilung: **29.06.2022**
(21) Anmeldenummer: 18730242.7
(22) Anmeldetag: 23.05.2018
(51) Int. Cl.: G05B 19/418, H04L 41/0604, H04L 67/12

(54) **VERFAHREN ZUR ÜBERTRAGUNG ANALYSERELEVANTER DATEN, SENDER UND SYSTEM**
METHOD FOR TRANSMITTING ANALYSIS-RELATED DATA, TRANSMITTER AND SYSTEM
PROCÉDÉ DE TRANSMISSION DE DONNÉES IMPORTANTES POUR L'ANALYSE, ÉMETTEUR ET SYSTÈME

(30) Priorität: 30.05.2017 EP 17173424
(43) Veröffentlichungstag der Anmeldung: 05.02.2020
(73) Patentinhaber: Siemens Aktiengesellschaft, 80333 München (DE)
(72) Erfinder: HEINDL, Elisabeth, 90556 Cadolzburg (DE); WIECZOREK, Michael, 91056 Erlangen (DE)
(86) Internationale Anmeldenummer: PCT/EP2018/063436
(87) Internationale Veröffentlichungsnummer: WO 2018/219723

(56) Entgegenhaltungen:
- EP-A2- 2 661 020
- US-A1- 2015 148 935

## Beschreibung

Die Erfindung betrifft ein Verfahren zur Übertragung analyserelevanter Daten von einem Sender, bei welchem die analyserelevanten Daten vorliegen, an einen Empfänger, bei welchem Datenanalysen durchführbar sind.

Immer häufiger werden heutzutage Daten von einem Sender an einen Empfänger übermittelt. Die Daten können empfängerseitig dann gespeichert, verwaltet und/oder analysiert werden. Üblicherweise werden in dem Gerät große Datenmengen generiert, die üblicherweise über das Netzwerk an die Datenverwaltungseinheit übertragen werden sollen. Um die Daten zuverlässig zu übertragen, werden die Daten in der Regel komprimiert, d.h. redundante Daten werden entfernt und/oder eine Dichte der Daten wird erhöht.

Kommt es jedoch zu einer starken zeitlichen Schwankung der verfügbaren Bandbreite des Netzwerks, kann ein unkontrollierter Datenverlust auftreten. Dann werden - trotz der Komprimierung - nicht alle Daten übermittelt und es kann nicht kontrolliert werden, welcher Teil der Daten nicht übermittelt wird. Auch bei einer starken Störung der Übertragung (beispielsweise in Form eines Rauschens) kann ein unkontrollierter Datenverlust die Folge sein. Dieser unkontrollierte Datenverlust kann unter Umständen eine sinnvolle Analyse der übertragenen Daten unmöglich machen.

Aus der US 2015/148935 A1 ist ein Verfahren zur Herstellung von Halbleitermaterialien bekannt, bei dem abhängig von Zeitüberschreitungen ein Berichtszyklus geändert wird. Eine dynamische Datentypauswahl in Abhängigkeit von dem Analysezweck ist nicht vorgesehen.

Die EP 2 661 020 A2 beschäftigt sich mit der Anpassung eines Telekommunikationsnetzwerks an Ergebnisse einer Übertragungsleistungsbeobachtung.

Eine Aufgabe der Erfindung ist es, ein verbessertes Verfahren zur Übertragung analyserelevanter Daten von einem Sender an einen Empfänger anzugeben.

Die Aufgabe wird gelöst durch ein Verfahren der zuvor genannten Art, welches im Anspruch 1 angegeben wird.

Ein Vorteil der Erfindung ist es, dass die Datenverbindung, welche zur Verfügung steht, bestmöglich ausgenutzt werden kann. Entsprechend der Erfindung ist die Auswahl der anzuwendenden Auswahlregel abhängig von einer auf die zu übertragenden Daten vorgesehenen Datenanalyse, sodass die zu übertragenden Daten abhängig von der vorgesehenen Datenanalyse ausgewählt werden können. Auf diese Weise kann sichergestellt werden, dass für die vorgesehene Datenanalyse notwendige Daten übermittelt werden.

Die Formulierung "entsprechend der ausgewählten Auswahlregel" kann aufgefasst werden als "wie von der ausgewählten Auswahlregel vorgegeben".

Es ist zweckmäßig, wenn jede der mehreren Auswahlregeln ein Auswahlverfahren zur Auswahl von zu übertragenden Daten aus analyserelevanten Daten für eine bestimmte Art einer Datenanalyse und für einen bestimmten Zustand der Datenverbindung zwischen dem Sender und dem Empfänger vorgibt. Das heißt, dass die mehreren Auswahlregeln zweckmäßigerweise spezifisch für eine bestimmte Art einer Datenanalyse und für einen bestimmten Zustand der Datenverbindung zwischen dem Sender und dem Empfänger sind.

Die mehreren Auswahlregeln zur Auswahl von zu übertragenden Daten aus den analyserelevanten Daten, im Folgenden auch nur Auswahlregeln, sind vorgebbar. Zweckmäßigerweise wird/ist zumindest ein Teil der Auswahlregeln vorgegeben. Insbesondere kann der vorgegebene Teil der Auswahlregeln manuell vorgegeben werden/sein. Weiter kann der vorgegebene Teil der Auswahlregeln manuell aktualisiert werden. Außerdem können, insbesondere jederzeit, Auswahlregeln zu dem vorgegebenen Teil der Auswahlregeln manuell hinzugefügt und/oder entfernt werden.

Vorzugsweise ist zumindest ein Teil der mehreren (vorgebbaren) Auswahlregeln empfängerseitig hinterlegt. Beispielsweise kann zumindest ein Teil der mehreren (vorgebbaren) Auswahlregeln auf einem Datenspeicher des Empfängers hinterlegt sein. Weiter kann zumindest ein Teil der mehreren (vorgebbaren) Auswahlregeln auf einem Datenspeicher, welcher mit dem Empfänger verbunden ist, hinterlegt sein. Insbesondere kann zumindest ein Teil der mehreren (vorgebbaren) Auswahlregeln manuell hinterlegt worden sein. Der hinterlegte Teil der mehreren (vorgebbaren) Auswahlregeln kann der zuvor genannte vorgegebene Teil der Auswahlregeln sein.

Die auf die zu übertragenden Daten vorgesehene Datenanalyse, im Folgenden auch vorgesehene Datenanalyse oder nur Datenanalyse, wird vorteilhafterweise manuell ausgewählt und/oder vorgegeben.

Vorzugsweise wird der Zustand der Datenverbindung zwischen dem Sender und dem Empfänger, im Folgenden auch Zustand der Datenverbindung, von dem Sender bestimmt. Weiter kann der Zustand der Datenverbindung von dem Empfänger bestimmt werden. Weiter kann der Zustand der Datenverbindung beispielsweise unter Verwendung einer Software bestimmt werden.

Es ist bevorzugt, wenn der Zustand der Datenverbindung (zwischen dem Sender und dem Empfänger) eine Übertragungsrate, eine Übertragungsgeschwindigkeit und/oder eine Bandbreite umfasst.

Der Zustand der Datenverbindung kann beispielsweise zu einem vorgegebenen Zeitpunkt und/oder nach einem vorgegebenen Zeitintervall bestimmt werden. Außerdem kann der Zustand der Datenverbindung vor der Datenübertragung und/oder während der Übertragung bestimmt werden.

Vorzugsweise erfolgt die Auswahl der anzuwendenden Auswahlregel zumindest teilweise automatisch.

Die anzuwendende Auswahlregel kann empfängerseitig ausgewählt werden. Weiter wird die ausgewählte Auswahlregel von dem Empfänger an den Sender übertragen.

Weiter kann zumindest ein Teil der mehreren Auswahlregeln von dem Empfänger an den Sender übertragen werden. Insbesondere können die an den Sender übertragenen Auswahlregeln von dem Sender, beispielsweise in einem Datenspeicher des Senders, gespeichert werden. Die anzuwendende Auswahlregel kann empfängerseitig ausgewählt werden und eine Information, welche Auswahlregel ausgewählt wurde, kann an den Sender übertragen werden. Alternativ oder zusätzlich kann die anzuwendende Auswahlregel senderseitig, insbesondere von dem Sender, ausgewählt werden, insbesondere aus den zuvor an den Sender übertragenen Auswahlregeln.

In der Erfindung wird die anzuwendende Auswahlregel zweistufig ausgewählt. Das heißt, dass die Auswahl der anzuwendenden Auswahlregel zweistufig, d.h. in einer ersten Stufe und einer zweiten Stufe, durchgeführt werden kann.

Es wird in der ersten Stufe (der zweistufigen Auswahl) abhängig von der auf die zu übertragenden Daten vorgesehenen Datenanalyse eine Vorauswahl aus den mehreren Auswahlregeln getroffen. Weiter kann in der zweiten Stufe (der zweistufigen Auswahl) abhängig von dem Zustand der Datenverbindung zwischen dem Sender und dem Empfänger die anzuwendende Auswahlregel aus der Vorauswahl, welche insbesondere in der ersten Stufe getroffen wurde, ausgewählt werden.

Als "eine Vorauswahl aus den mehreren Auswahlregeln treffen" kann verstanden werden, dass aus den mehreren Auswahlregeln ein Teil der Auswahlregeln vorausgewählt wird. Die vorausgewählten Auswahlregeln können wiederum als Vorauswahl - auch Vor-Auswahl - verstanden werden. Zweckmäßigerweise umfasst die Vorauswahl mindestens zwei vorausgewählte Auswahlregeln. Die zwei Stufen der zweistufigen Auswahl können zeitlich getrennt erfolgen. Zweckmäßigerweise erfolgt die erste Stufe vor der zweiten Stufe. Die zweite Stufe kann direkt im Anschluss an die erste Stufe erfolgen oder nach einer gewissen Wartezeit.

Außerdem können die zwei Stufen der zweistufigen Auswahl in unterschiedlichen Instanzen durchgeführt werden. Prinzipiell können die zwei Stufen der zweistufigen Auswahl aber auch in ein und derselben Instanz durchgeführt werden.

Zweckmäßigerweise wird die vorgesehene Datenanalyse vor der ersten Stufe ausgewählt und/oder vorgegeben.

Es ist bevorzugt, wenn die erste Stufe der zweistufigen Auswahl manuell durchgeführt wird. Das heißt, vorzugsweise wird die Vorauswahl aus den mehreren Auswahlregeln manuell getroffen. Mit anderen Worten: Vorzugsweise findet die Vorauswahl manuell statt. Die Vorauswahl kann beispielsweise anhand von Erfahrungswerten getroffen werden.

Vorzugsweise wird nach der ersten Stufe der zweistufigen Auswahl die Vorauswahl aus den mehreren Auswahlregeln empfängerseitig hinterlegt und dann die zweite Stufe der zweistufigen Auswahl durchgeführt. Das heißt, dass nur die Vorauswahl aus den mehreren Auswahlregeln empfängerseitig hinterlegt werden/sein kann. Auswahlregeln, welche nicht Teil der Vorauswahl sind, können gegebenenfalls nicht hinterlegt sein, insbesondere nicht empfängerseitig. Prinzipiell ist es möglich, wenn neben der Vorauswahl auch andere Auswahlregeln empfängerseitig hinterlegt werden. Vorzugweise wird zumindest die Vorauswahl aus den mehreren Auswahlregeln empfängerseitig hinterlegt.

Zweckmäßigerweise wird die erste Stufe der zweistufigen Auswahl empfängerseitig durchgeführt. Beispielsweise kann ein Benutzer, welcher auf den Empfänger zugreifen kann, die erste Stufe der zweistufigen Auswahl durchführen.

Vor der ersten Stufe der zweistufigen Auswahl können die mehreren Auswahlregeln empfängerseitig hinterlegt werden und dann kann die zweistufige Auswahl, insbesondere die erste Stufe und die zweite Stufe, durchgeführt werden. Auch in diesem Fall kann die erste Stufe der zweistufigen Auswahl manuell durchgeführt werden.

Prinzipiell kann die erste Stufe der zweistufigen Auswahl auch zumindest teilweise automatisch durchgeführt werden. In dem Fall, in dem die mehreren Auswahlregeln empfängerseitig hinterlegt werden bevor die zweistufige Auswahl durchgeführt wird, kann die Vorauswahl, beispielsweise in Abhängigkeit von der Datenanalyse, vorgegeben sein. Dann kann durch die Wahl/Vorgabe der vorgesehenen Datenanalyse, insbesondere unmittelbar, die Vorauswahl getroffen werden. Auf diese Weise kann die erste Stufe der zweistufigen Auswahl der anzuwendenden Auswahlregel zumindest teilweise automatisch ablaufen.

Falls die erste Stufe der zweistufigen Auswahl zumindest teilweise automatisch durchgeführt wird, kann die erste Stufe auch senderseitig durchgeführt werden. D.h. im letztgenannten Fall kann die Vorauswahl senderseitig getroffen werden. Erfindungsgemäß werden die mehreren Auswahlregeln vor der senderseitigen Vorauswahl von dem Empfänger an den Sender übertragen.

Vorzugsweise wird die zweite Stufe der zweistufigen Auswahl zumindest teilweise automatisch durchgeführt. Insbesondere kann die zweite Stufe der zweistufigen Auswahl vollautomatisch durchgeführt werden, d.h. ohne Eingreifen einer handelnden Person bzw. des Benutzers.

Die zweite Stufe der zweistufigen Auswahl kann empfängerseitig durchgeführt werden. D.h. die anzuwendende Auswahlregel kann empfängerseitig aus der Vorauswahl ausgewählt werden. Beispielsweise kann die zweite Stufe der zweistufigen Auswahl unter Verwendung einer empfängerseitig hinterlegten Software durchgeführt werden. Die Software kann bei dem Empfänger hinterlegt sein. Insbesondere kann die Software auf einem Datenträger des Empfängers hinterlegt sein. Weiter ist es möglich, dass die Software auf einem Datenträger, welcher mit dem Empfänger verbunden ist, hinterlegt ist.

Weiter kann die in der zweiten Stufe (der zweistufigen Auswahl) ausgewählte Auswahlregel von dem Empfänger an den Sender übertragen werden.

Außerdem kann eine Information, welche Auswahlregel in der zweiten Stufe ausgewählt wurde, von dem Empfänger an den Sender übertragen werden. Es ist zweckmäßig, wenn vor der Übertragung dieser Information zumindest die Vorauswahl von dem Empfänger an den Sender übertragen wurde.

Ferner kann die Vorauswahl, welche insbesondere in der ersten Stufe getroffen wurde, von dem Empfänger an den Sender übertragen werden. Die zweite Stufe der zweistufigen Auswahl kann senderseitig durchgeführt werden. D.h. die anzuwendende Auswahlregel kann senderseitig aus der Vorauswahl ausgewählt werden. Beispielsweise kann die zweite Stufe der zweistufigen Auswahl unter Verwendung einer senderseitig hinterlegten Software durchgeführt werden. Die Software kann bei dem Sender hinterlegt sein. Insbesondere kann die Software auf einem Datenträger des Senders hinterlegt sein. Weiter ist es möglich, dass die Software auf einem Datenträger, welcher mit dem Sender verbunden ist, hinterlegt ist. Insbesondere kann der Sender die zweite Stufe der zweistufigen Auswahl durchführen.

Das Verfahren kann mehrmals wiederholt werden. Beispielsweise kann der Zustand der Datenverbindung mehrmals, insbesondere zu vorgegebenen Zeitpunkten und/oder nach vorgegebenen Zeitintervallen, bestimmt werden. Falls bei der Bestimmung des Zustands der Datenverbindung festgestellt wird, dass sich der Zustand der Datenverbindung um ein vorgegebenes Maß geändert hat, kann die erstgenannte Datenübertragung beendet werden und eine weitere Datenübertragung gestartet werden. Auch falls sich die vorgesehene Datenanalyse ändert, kann die bisherige Datenübertragung beendet werden und eine weitere Datenübertragung gestartet werden. Jede der Datenübertragungen findet vorzugsweise nach dem erfindungsgemäßen Verfahren statt. D.h. bei der weiteren Datenübertragung findet vorzugsweise eine Auswahl der anzuwendenden Auswahlregel in analoger Weise statt wie bei der erstgenannten Datenübertragung.

Der Zustand der Datenverbindung kann implizit bestimmt werden, beispielsweise bei einer vorherigen Datenübertragung, die vorzugsweise vor der erstgenannten Datenübertragung stattfindet. Beispielsweise kann bei der vorherigen Datenübertragung ein bestimmter Zustand der Datenverbindung angenommen werden. Wenn es bei der vorherigen Datenübertragung beispielsweise zu einer Fehlermeldung kommt, dann kann bei der erstgenannten Datenübertragung für den Zustand der Datenverbindung beispielsweise eine reduzierte Übertragungsrate, eine reduzierte Übertragungsgeschwindigkeit und/oder eine reduzierte Bandbreite angenommen werden. Zu der Fehlermeldung bei der vorherigen Datenübertragung kann es beispielsweise kommen, wenn ein Request des Senders bei der vorherigen Datenübertragung von dem Empfänger nicht beantwortet wird.

Wenn es in der erstgenannten Datenübertragung wieder zu einer Fehlermeldung kommt, dann kann bei der weiteren Datenübertragung für den Zustand der Datenverbindung beispielsweise eine nochmals reduzierte Übertragungsrate, eine nochmals reduzierte Übertragungsgeschwindigkeit und/oder eine nochmals reduzierte Bandbreite angenommen werden. Wenn es in der erstgenannten Datenübertragung hingegen eine vorgegebene Zeitspanne lang zu keiner Fehlermeldung kommt, ist es möglich, dass nach dieser vorgegebenen Zeitspanne die weitere Datenübertragung startet, bei welcher in diesem Fall wieder derjenige Zustand der Datenverbindung angenommen wird, welcher bei der vorherigen Datenübertragung (vor der erstgenannten Datenübertragung) angenommen wurde.

Eine der jeweiligen Auswahlregeln kann beispielsweise eine Komprimierungsvorschrift enthalten. Weiter kann eine der Auswahlregeln eine Vorfilterungsvorschrift enthalten. Außerdem kann eine der Auswahlregeln eine Vorbearbeitungsvorschrift (z.B. preprocessing und/oder stream processing) enthalten. Nach der Vorbearbeitungsvorschrift können beispielsweise nur Ausreißer ausgewählt werden. Weiter können nach der Vorbearbeitungsvorschrift beispielsweise Daten unter Verwendung der sogenannten Western Electric Rules ausgewählt werden.

Der Sender kann beispielsweise mit einer Anlage verbunden sein oder ein Teil einer Anlage sein. Als Daten können beispielsweise Werte mehrerer Betriebsparameter der Anlage vorliegen.

Eine der jeweiligen Auswahlregeln kann beispielsweise vorschreiben, für welche(n) der Betriebsparameter vorliegende Werte zu übermitteln sind. Eine der Auswahlregeln kann weiter vorschreiben, von welchem Teil der Anlagen vorliegende Werte der Betriebsparameter zu übermitteln sind. Außerdem kann eine der Auswahlregeln vorschreiben, in welchem Zeitintervall vorliegende Werte für Betriebsparameter zu übermitteln sind.

Die Auswahlregeln können außerdem beliebige andere Auswahlvorschriften aufweisen.

Die zu übertragenden Daten können in Echtzeit von dem Sender an den Empfänger übertragen werden. Liegen als Daten beispielsweise Werte mehrerer Betriebsparameter einer Anlage, insbesondere der zuvor genannten Anlage, vor, dann können die Werte vorzugsweise dann, wenn sie anfallen, insbesondere wenn sie bestimmt werden, übermittelt werden.

Der Empfänger kann beispielsweise eine Datenverwaltungseinheit sein. Insbesondere kann der Empfänger ein Server, eine Cloud und/oder ein Internet-der-Dinge-Service sein.

Ferner betrifft die Erfindung einen Sender zur Übertragung analyserelevanter Daten an einen Empfänger, bei welchem Datenanalysen durchführbar sind. Zweckmäßigerweise liegen die analyserelevanten Daten bei dem Sender vor.

Erfindungsgemäß ist der Sender dazu eingerichtet, die zu übertragenden Daten aus den analyserelevanten Daten entsprechend einer auf die analyserelevanten Daten anzuwendende Auswahlregel auszuwählen, wobei die anzuwendende Auswahlregel für eine Datenübertragung aus mehreren vorgebbaren Auswahlregeln zur Auswahl von zu übertragenden Daten aus den analyserelevanten Daten ausgewählt wurde, wobei die Auswahl der anzuwendenden Auswahlregel für diese Datenübertragung abhängig ist von einer auf die zu übertragenden Daten vorgesehenen Datenanalyse und von einem Zustand der Datenverbindung zwischen dem Sender und dem Empfänger. Weiter ist der Sender dazu eingerichtet, die zu übertragenden Daten an den Empfänger zu übertragen.

Der Sender kann zur Durchführung des zuvor genannten Verfahrens eingesetzt werden. Insbesondere kann der Sender der in dem zuvor genannten Verfahren eingesetzte Sender sein.

Außerdem betrifft die Erfindung ein System mit einem Sender und einem Empfänger zur Übertragung analyserelevanter Daten von dem Sender, bei welchem die analyserelevanten Daten vorliegen, an einen Empfänger, bei welchem Datenanalysen durchführbar sind. Zweckmäßigerweise ist der Sender der zuvor genannte Sender.

Erfindungsgemäß ist das System dazu eingerichtet, für eine Datenübertragung eine auf die analyserelevanten Daten anzuwendende Auswahlregel aus mehreren vorgebbaren Auswahlregeln zur Auswahl von zu übertragenden Daten aus den analyserelevanten Daten auszuwählen, wobei die Auswahl der anzuwendenden Auswahlregel für diese Datenübertragung abhängig ist von einer auf die zu übertragenden Daten vorgesehenen Datenanalyse und von einem Zustand der Datenverbindung zwischen dem Sender und dem Empfänger. Ferner ist der Sender dazu eingerichtet, entsprechend der ausgewählten Auswahlregel die zu übertragenden Daten aus den analyserelevanten Daten auszuwählen und die zu übertragenden Daten an den Empfänger zu übertragen.

Das System kann zur Durchführung des zuvor genannten Verfahrens eingesetzt werden. Insbesondere kann der Sender der in dem zuvor genannten Verfahren eingesetzte Sender sein. Weiter kann der Empfänger der in dem zuvor genannten Verfahren eingesetzte Empfänger sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und dem erfindungsgemäßen Sender und/oder System kombinierbar. So sind Verfahrensmerkmale auch als Eigenschaft des entsprechenden Senders und/oder des entsprechenden Systems gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Das Ausführungsbeispiel dient der Erläuterung der Erfindung und beschränkt die Erfindung nicht auf die darin angegebene Kombination von Merkmalen, auch nicht in Bezug auf funktionale Merkmale. Außerdem können dazu geeignete Merkmale des Ausführungsbeispiels auch explizit isoliert betrachtet, aus einem Ausführungsbeispiel entfernt und mit einem beliebigen der Ansprüche kombiniert werden.

Es zeigen:
- FIG 1: ein System mit einem Sender und einem Empfänger, wobei der Sender mit einer Anlage verbunden ist und
- FIG 2: ein schematisches Flussdiagramm einer zweistufigen Auswahl.

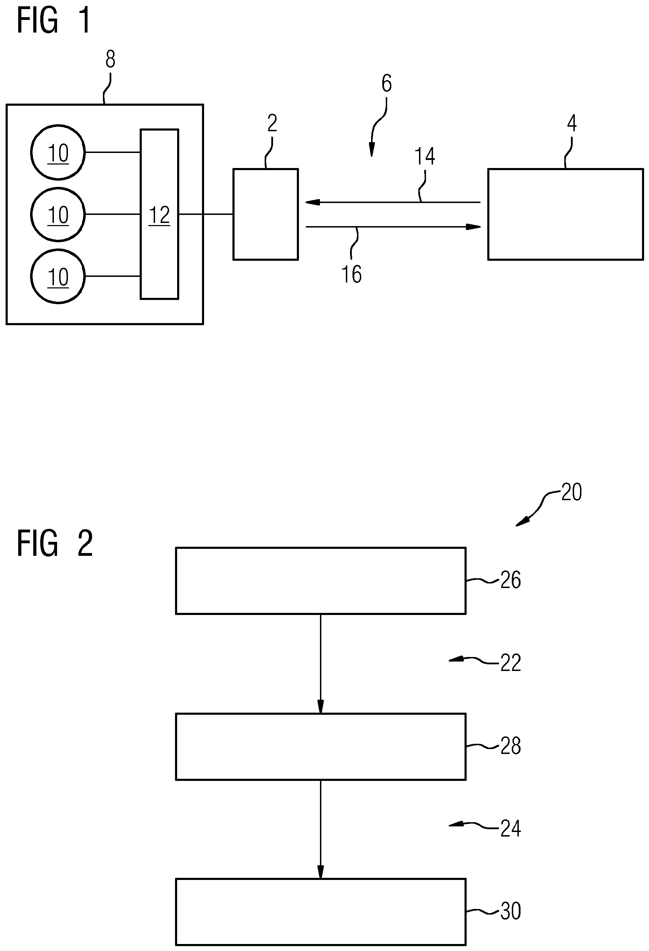

FIG 1 zeigt schematisch einen Sender 2 und einen Empfänger 4, die über eine Datenverbindung 6 miteinander kommunizieren können. Die Datenverbindung 6 kann kabelgebunden sein. Weiter kann die Datenverbindung 6 kabellos sein. Beispielsweise kann die Datenverbindung 6 eine Funkverbindung sein.

Der Empfänger 4 kann beispielsweise eine Datenverwaltungseinheit sein. Insbesondere kann der Empfänger 4 ein Server, eine Cloud und/oder ein Internet-der-Dinge-Service sein.

Der Sender 2 ist mit einer Anlage 8 verbunden. Die Anlage 8 umfasst mehrere Sensoren 10 und eine Steuerung 12. In FIG 1 sind beispielhaft drei Sensoren 10 dargestellt. Prinzipiell kann die Anlage 8 aber jede beliebige Anzahl an Sensoren 10 aufweisen. Die Sensoren 10 sind mit der Steuerung 12 verbunden. Weiter ermitteln die Sensoren 10 in vorgegebenen Zeitabständen Messwerte für bestimmte Anlagenparameter. Diese Messwerte stellen analyserelevante Daten dar. Die Messwerte können beispielsweise über die Steuerung 12 an den Sender 2 übermittelt werden. Ferner kann der Sender 2 beispielsweise über die Steuerung 12 die Messwerte abgreifen. Folglich liegen bei dem Sender 2 die Messwerte als analyserelevante Daten vor.

Bei dem Empfänger 4 sollen Datenanalysen durchgeführt werden. Dazu sollen die analyserelevanten Daten zumindest teilweise von dem Sender 2 zu dem Empfänger 4 übertragen werden.

Es sind verschiedenste Datenanalysen denkbar. Bei einer ersten Datenanalyse soll beispielsweise analysiert werden, wann ein bestimmtes Bauteil der Anlage voraussichtlich ausgetauscht werden muss. Bei einer zweiten Datenanalyse soll beispielsweise analysiert werden, welche Größen einen Durchsatz der Anlage beeinflussen. Bei einer dritten Datenanalyse soll beispielsweise analysiert werden, welche Größen eine Qualität (Reinheit, Präzision und/oder ähnliches) von mit der Anlage produzierten Teilen beeinflussen. Zusätzlich oder alternativ sind auch andere Datenanalysen denkbar.

Mehrere Auswahlregeln zur Auswahl von zu übertragenden Daten aus den analyserelevanten Daten sind vorgebbar. Zumindest ein Teil der vorgebbaren Auswahlregeln wird empfängerseitig vorgegeben. Insbesondere wird der vorgegebene Teil der Auswahlregeln manuell vorgegeben.

Jede der mehreren Auswahlregeln gibt ein Auswahlverfahren zur Auswahl von zu übertragenden Daten aus analyserelevanten Daten für eine bestimmte Art einer Datenanalyse und für einen bestimmten Zustand der Datenverbindung 6 zwischen dem Sender 2 und dem Empfänger 4 vor.

Für eine Datenübertragung wird eine auf die analyserelevanten Daten anzuwendende Auswahlregel 30 aus den mehreren Auswahlregeln 26 ausgewählt. Dabei ist die Auswahl der anzuwendenden Auswahlregel 30 für diese Datenübertragung abhängig von einer auf die zu übertragenden Daten vorgesehenen Datenanalyse und von einem Zustand der Datenverbindung 6.

Es wird manuell vorgegeben, welche Datenanalyse vorgesehen ist.

In diesem Beispiel wird die anzuwendende Auswahlregel zweistufig, d.h. in einer ersten Stufe 22 und einer zweiten Stufe 24, ausgewählt. Die zweistufige Auswahl ist schematisch in dem Flussdiagramm 20 in FIG 2 gezeigt.

In der ersten Stufe 22 wird abhängig von der auf die zu übertragenden Daten vorgesehenen Datenanalyse eine Vorauswahl 28 aus den mehreren (vorgebbaren) Auswahlregeln 26 getroffen. Beispielsweise kann diese Vorauswahl 28 manuell getroffen werden. Zumindest die Vorauswahl 28 aus den mehreren Auswahlregeln 26 wird empfängerseitig hinterlegt. Beispielsweise kann die Vorauswahl 28 aus den mehreren Auswahlregeln 26 auf einem Datenspeicher des Empfängers 4 hinterlegt werden. Zweckmäßigerweise findet die erste Stufe 22 empfängerseitig statt, d.h. zweckmäßigerweise wird die Vorauswahl 28 empfängerseitig getroffen.

Der Zustand der Datenverbindung 6 zwischen dem Sender 2 und dem Empfänger 4 wird bestimmt. Beispielsweise kann der Zustand der Datenverbindung eine Übertragungsrate, eine Übertragungsgeschwindigkeit und/oder eine Bandbreite umfassen. Der Zustand der Datenverbindung 6 kann von dem Sender 2 und/oder von dem Empfänger 4 bestimmt werden. Zweckmäßigerweise wird der Zustand der Datenverbindung 6 vor der jeweiligen Datenübertragung bestimmt.

In der zweiten Stufe 24 der zweistufigen Auswahl wird abhängig von dem Zustand der Datenverbindung 6 zwischen dem Sender 2 und dem Empfänger 4 die anzuwendende Auswahlregel 30 aus der Vorauswahl 28, welche in der ersten Stufe 22 getroffen wurde, ausgewählt.

Die zweite Stufe 24 kann beispielsweise von dem Empfänger 4 durchgeführt werden. Das heißt, die anzuwendende Auswahlregel 30 kann empfängerseitig ausgewählt werden. Die ausgewählte Auswahlregel, die der anzuwendenden Auswahlregel 30 entspricht, kann dann von dem Empfänger 4 an den Sender 2 übertragen werden. Weiter ist es möglich, dass nur eine Information darüber, welche Auswahlregel 30 ausgewählt wurde, von dem Empfänger 4 an den Sender 2 übertragen wird. In letzterem Fall ist es zweckmäßig, wenn zuvor die Vorauswahl 28 aus den mehreren Auswahlregeln 26 von dem Empfänger 4 an den Sender 2 übertragen wurde.

In FIG 1 ist ein Pfeil 14 dargestellt, welcher von dem Empfänger 4 zu dem Sender 2 zeigt. Dieser Pfeil 14 verdeutlicht die Übertragung der anzuwendenden Auswahlregel oder die Übertragung der Information darüber, welche Auswahlregel ausgewählt wurde, jeweils von dem Empfänger 4 an den Sender 2. Zusätzlich oder alternativ verdeutlicht dieser Pfeil 14 die Übertragung der Vorauswahl 28 von dem Empfänger 4 an den Sender 2.

Die zweite Stufe 24 kann auch von dem Sender 2 durchgeführt werden. Dazu wird zweckmäßigerweise die Vorauswahl 28 von dem Empfänger 4 an den Sender 2 übertragen und der Sender 2 wählt die anzuwendende Auswahlregel 30 aus der Vorauswahl 28 aus.

Der Sender 2 (FIG 1) wählt entsprechend der ausgewählten Auswahlregel 30 die zu übertragenden Daten aus den analyserelevanten Daten aus. Dann werden die zu übertragenden Daten von dem Sender 2 an den Empfänger 4 übertragen. Die Übertragung der zu übertragenden Daten wird in FIG 1 durch einen Pfeil 16, welcher vom Sender 2 zu dem Empfänger 4 zeigt, dargestellt.

Der Zustand der Datenverbindung 6 kann auch während einer Datenübertragung bestimmt werden. Wird bei der Bestimmung des Zustandes der Datenverbindung z.B. festgestellt, dass sich der Zustand der Datenverbindung 6 um ein vorgegebenes Maß geändert hat, kann die zuerst genannte Datenübertragung beendet werden und eine weitere Datenübertragung gestartet werden. Weiter kann der Zustand der Datenübertragung implizit bestimmt werden, beispielsweise in Form einer Fehlermeldung während der zuerst genannten Datenübertragung. Falls es zu der Fehlermeldung während der zuerst genannten Datenübertragung kommt, kann angenommen werden, dass sich der Zustand der Datenverbindung um ein vorgegebenes Maß verschlechtert hat. Falls es zu der Fehlermeldung während der zuerst genannten Datenübertragung kommt, kann außerdem die zuerst genannte Datenübertragung beendet werden und eine weitere Datenübertragung gestartet werden.

Auch wenn eine andere Datenanalyse vorgesehen bzw. ausgewählt wird, kann die zuvor genannte Datenübertragung beendet werden und eine weitere Datenübertragung gestartet werden. Jede der Datenübertragungen findet vorzugsweise nach dem erfindungsgemäßen Verfahren statt. D.h. bei der weiteren Datenübertragung findet vorzugsweise eine Auswahl der anzuwendenden Auswahlregel in analoger Weise statt wie bei der zuvor genannten Datenübertragung.

Ändert sich nur der Zustand der Datenverbindung 6 um ein bestimmtes Maß und bleibt die vorgesehene Datenanalyse unverändert, kann bei der weiteren Datenübertragung nur die zweite Stufe der zweistufigen Auswahl durchgeführt werden. D.h. die erste Stufe kann in diesem Fall bei der weiteren Datenübertragung übersprungen werden, denn die erste Stufe würde zu derselben Vorauswahl führen.

Mittels der Erfindung wird einerseits die zur Verfügung stehende Datenverbindung bestmöglich ausgenutzt und andererseits werden die zu übertragenden Daten abhängig von der vorgesehenen Datenanalyse ausgewählt. Auf diese Weise kann sichergestellt werden, dass für die vorgesehene Datenanalyse notwendige Daten übermittelt werden.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden.

## Patentansprüche

1. Verfahren zur Übertragung analyserelevanter Daten von einem Sender (2), bei welchem die analyserelevanten Daten vorliegen, an einen Empfänger (4), bei welchem Datenanalysen durchführbar sind, zur Datenanalyse,
**dadurch gekennzeichnet, dass**
- für eine Datenübertragung eine auf die analyserelevanten Daten anzuwendende Auswahlregel (30) aus mehreren vorgebbaren Auswahlregeln (26) zur Auswahl von zu übertragenden Daten aus den analyserelevanten Daten ausgewählt wird,
wobei die Auswahl der anzuwendenden Auswahlregel (30) für diese Datenübertragung abhängig ist von einer auf die zu übertragenden Daten vorgesehenen Datenanalyse und von einem Zustand der Datenverbindung (6) zwischen dem Sender (2) und dem Empfänger (4),
- entsprechend der ausgewählten Auswahlregel (30) die zu übertragenden Daten aus den analyserelevanten Daten ausgewählt werden und
- die zu übertragenden Daten von dem Sender (2) an den Empfänger (4) übertragen werden,
- die anzuwendende Auswahlregel (30) zweistufig ausgewählt wird,
- wobei in der ersten Stufe (22) abhängig von der auf die zu übertragenden Daten vorgesehenen Datenanalyse eine Vorauswahl (28) aus den mehreren Auswahlregeln (26) getroffen wird und
- in der zweiten Stufe (24) abhängig von dem Zustand der Datenverbindung (6) zwischen dem Sender (2) und dem Empfänger (4) die anzuwendende Auswahlregel (30) aus der Vorauswahl (28) ausgewählt wird,
- wobei die erste Stufe (22) der zweistufigen Auswahl zumindest teilweise automatisch durchgeführt wird,
- wobei die erste Stufe (22) der zweistufigen Auswahl senderseitig durchgeführt wird,
- wobei die mehreren Auswahlregeln (26) vor der senderseitigen Vorauswahl (28) von dem Empfänger (4) an den Sender (2) übertragen werden.

2. Verfahren nach Anspruch 1,
**dadurch gekennzeichnet, dass**
jede der mehreren Auswahlregeln (26) ein Auswahlverfahren zur Auswahl von zu übertragenden Daten aus analyserelevanten Daten für eine bestimmte Art einer Datenanalyse und für einen bestimmten Zustand der Datenverbindung (6) zwischen dem Sender (2) und dem Empfänger (4) vorgibt.

3. Verfahren nach Anspruch 1 oder 2,
**dadurch gekennzeichnet, dass**
zumindest ein Teil der mehreren Auswahlregeln (26) empfängerseitig hinterlegt ist/wird.

4. Verfahren nach einem der vorhergehenden Ansprüche,
**dadurch gekennzeichnet, dass**
der Zustand der Datenverbindung (6) zwischen dem Sender (2) und dem Empfänger (4) eine Übertragungsrate, eine Übertragungsgeschwindigkeit und/oder eine Bandbreite umfasst.

5. Verfahren nach einem der vorhergehenden Ansprüche,
**dadurch gekennzeichnet, dass**
nach der ersten Stufe (22) der zweistufigen Auswahl die Vorauswahl (28) aus den mehreren Auswahlregeln (26) empfängerseitig hinterlegt wird und dann die zweite Stufe (24) der zweistufigen Auswahl durchgeführt wird.

6. Verfahren nach einem der vorhergehenden Ansprüche,
**dadurch gekennzeichnet, dass**
die zweite Stufe (24) der zweistufigen Auswahl zumindest teilweise automatisch durchgeführt wird.

7. Verfahren nach einem der vorhergehenden Ansprüche,
**dadurch gekennzeichnet, dass**
die zweite Stufe (24) der zweistufigen Auswahl empfängerseitig durchgeführt wird.

8. Verfahren nach einem der vorhergehenden Ansprüche,
**dadurch gekennzeichnet, dass**
die zu übertragenden Daten in Echtzeit von dem Sender (2) an den Empfänger (4) übertragen werden.

9. Sender (2) zur Übertragung analyserelevanter Daten an einen Empfänger (4), zur Datenanalyse, bei welchem Datenanalysen durchführbar sind, wobei bei dem Sender (2) die analyserelevanten Daten vorliegen,
**dadurch gekennzeichnet, dass**
der Sender (2) dazu eingerichtet ist,
- die zu übertragenden Daten aus den analyserelevanten Daten entsprechend einer auf die analyserelevanten Daten anzuwendende Auswahlregel (30) auszuwählen,
wobei die anzuwendende Auswahlregel (30) für eine Datenübertragung aus mehreren vorgebbaren Auswahlregeln (26) zur Auswahl von zu übertragenden Daten aus den analyserelevanten Daten ausgewählt wurde, wobei die Auswahl der anzuwendenden Auswahlregel (30) für diese Datenübertragung abhängig ist von einer auf die zu übertragenden Daten vorgesehenen Datenanalyse und von einem Zustand der Datenverbindung (6) zwischen dem Sender (2) und dem Empfänger (4), und
- die zu übertragenden Daten an den Empfänger (4) zu übertragen,
- die anzuwendende Auswahlregel (30) zweistufig ausgewählt wird,
- wobei in der ersten Stufe (22) abhängig von der auf die zu übertragenden Daten vorgesehenen Datenanalyse eine Vorauswahl (28) aus den mehreren Auswahlregeln (26) getroffen wird und
- in der zweiten Stufe (24) abhängig von dem Zustand der Datenverbindung (6) zwischen dem Sender (2) und dem Empfänger (4) die anzuwendende Auswahlregel (30) aus der Vorauswahl (28) ausgewählt wird,
- wobei die erste Stufe (22) der zweistufigen Auswahl zumindest teilweise automatisch durchgeführt wird,
- wobei die erste Stufe (22) der zweistufigen Auswahl senderseitig durchgeführt wird,
- wobei die mehreren Auswahlregeln (26) vor der senderseitigen Vorauswahl (28) von dem Empfänger (4) an den Sender (2) übertragen werden.

10. System mit einem Sender (2) und einem Empfänger (4) zur Übertragung analyserelevanter Daten von dem Sender (2), zur Datenanalyse, bei welchem die analyserelevanten Daten vorliegen, an einen Empfänger (4), bei welchem Datenanalysen durchführbar sind,
**dadurch gekennzeichnet, dass**
das System dazu eingerichtet ist,
- für eine Datenübertragung eine auf die analyserelevanten Daten anzuwendende Auswahlregel (30) aus mehreren vorgebbaren Auswahlregeln (26) zur Auswahl von zu übertragenden Daten aus den analyserelevanten Daten auszuwählen,
wobei die Auswahl der anzuwendenden Auswahlregel (30) für diese Datenübertragung abhängig ist von einer auf die zu übertragenden Daten vorgesehenen Datenanalyse und von einem Zustand der Datenverbindung (6) zwischen dem Sender (2) und dem Empfänger (4),
und der Sender (2) gemäß Anspruch 9 ausgebildet ist.

## Claims

1. Method for transmitting analysis-relevant data from a transmitter (2), in which the analysis-relevant data are present, to a receiver (4), in which data analyses can be carried out, for data analysis,
**characterized in that**
- for a data transmission, a selection rule (30) to be applied to the analysis-relevant data is selected from a plurality of predefinable selection rules (26) for selecting data to be transmitted from the analysis-relevant data,
wherein the selection of the selection rule (30) to be applied for this data transmission is dependent on a data analysis intended for the data to be transmitted and on a state of the data connection (6) between the transmitter (2) and the receiver (4),
- the data to be transmitted are selected from the analysis-relevant data according to the selected selection rule (30), and
- the data to be transmitted are transmitted from the transmitter (2) to the receiver (4),
- the selection rule (30) to be applied is selected in two stages,
- wherein, in the first stage (22), a preselection (28) from the plurality of selection rules (26) is made on the basis of the data analysis intended for the data to be transmitted, and
- in the second stage (24), the selection rule (30) to be applied is selected from the preselection (28) on the basis of the state of the data connection (6) between the transmitter (2) and the receiver (4),
- wherein the first stage (22) of the two-stage selection is carried out in an at least partially automatic manner,
- wherein the first stage (22) of the two-stage selection is carried out in the transmitter,
- wherein the plurality of selection rules (26) are transmitted from the receiver (4) to the transmitter (2) before the preselection (28) in the transmitter.

2. Method according to Claim 1,
**characterized in that**
each of the plurality of selection rules (26) predefines a selection method for selecting data to be transmitted from analysis-relevant data for a particular type of data analysis and for a particular state of the data connection (6) between the transmitter (2) and the receiver (4).

3. Method according to Claim 1 or 2,
**characterized in that**
at least some of the plurality of selection rules (26) have been/are stored in the receiver.

4. Method according to one of the preceding claims,
**characterized in that**
the state of the data connection (6) between the transmitter (2) and the receiver (4) comprises a transmission rate, a transmission speed and/or a bandwidth.

5. Method according to one of the preceding claims,
**characterized in that**
after the first stage (22) of the two-stage selection, the preselection (28) from the plurality of selection rules (26) is stored in the receiver and the second stage (24) of the two-stage selection is then carried out.

6. Method according to one of the preceding claims,
**characterized in that**
the second stage (24) of the two-stage selection is carried out in an at least partially automatic manner.

7. Method according to one of the preceding claims,
**characterized in that**
the second stage (24) of the two-stage selection is carried out in the receiver.

8. Method according to one of the preceding claims,
**characterized in that**
the data to be transmitted are transmitted from the transmitter (2) to the receiver (4) in real time.

9. Transmitter (2) for transmitting analysis-relevant data to a receiver (4), in which data analyses can be carried out, for data analysis, wherein the analysis-relevant data are present in the transmitter (2),
**characterized in that**
the transmitter (2) is configured
- to select the data to be transmitted from the analysis-relevant data according to a selection rule (30) to be applied to the analysis-relevant data,
wherein the selection rule (30) to be applied for a data transmission has been selected from a plurality of predefinable selection rules (26) for selecting data to be transmitted from the analysis-relevant data, wherein the selection of the selection rule (30) to be applied for this data transmission is dependent on a data analysis intended for the data to be transmitted and on a state of the data connection (6) between the transmitter (2) and the receiver (4), and
- to transmit the data to be transmitted to the receiver (4),
- the selection rule (30) to be applied is selected in two stages,
- wherein, in the first stage (22), a preselection (28) from the plurality of selection rules (26) is made on the basis of the data analysis intended for the data to be transmitted, and
- in the second stage (24), the selection rule (30) to be applied is selected from the preselection (28) on the basis of the state of the data connection (6) between the transmitter (2) and the receiver (4),
- wherein the first stage (22) of the two-stage selection is carried out in an at least partially automatic manner,
- wherein the first stage (22) of the two-stage selection is carried out in the transmitter,
- wherein the plurality of selection rules (26) are transmitted from the receiver (4) to the transmitter (2) before the preselection (28) in the transmitter.

10. System having a transmitter (2) and a receiver (4) for transmitting analysis-relevant data from the transmitter (2), in which the analysis-relevant data are present, to a receiver (4), in which data analyses can be carried out, for data analysis,
**characterized in that**
the system is configured
- to select, for a data transmission, a selection rule (30) to be applied to the analysis-relevant data from a plurality of predefinable selection rules (26) for selecting data to be transmitted from the analysis-relevant data,
wherein the selection of the selection rule (30) to be applied for this data transmission is dependent on a data analysis intended for the data to be transmitted and on a state of the data connection (6) between the transmitter (2) and the receiver (4),
and the transmitter (2) is designed according to Claim 9.

## Revendications

1. Procédé de transmission de données, pertinentes pour l'analyse, d'un émetteur (2), dans lequel il y a les données pertinentes pour l'analyse, à un récepteur (4), dans lequel des analyses de données peuvent être effectuées, pour l'analyse de données,
**caractérisé en ce que**
- pour une transmission de données, on sélectionne, pour la sélection de données à transmettre dans les données pertinentes pour l'analyse, parmi plusieurs règles (26) de sélection pouvant être données à l'avance, une règle (30) de sélection à utiliser sur les données pertinentes pour l'analyse,
dans lequel la sélection de la règle (30) de sélection à utiliser dépend, pour cette transmission de données, d'une analyse de données prévue sur les données à transmettre et d'un état de la liaison (6) de données, entre l'émetteur (2) et le récepteur (4),
- conformément à la règle (30) de sélection sélectionnée, on sélectionne les données à transmettre dans les données pertinentes pour l'analyse et
- on transmet les données à transmettre de l'émetteur (2) au récepteur (4),
- on sélectionne en deux stades la règle (30) de sélection à utiliser,
- dans lequel, dans le premier stade (22), on effectue, en fonction de l'analyse de données prévue sur les données à transmettre, une sélection (28) préalable dans les plusieurs règles (26) de données et
- dans le deuxième stade (24), on sélectionne, dans la sélection (28) préalable, en fonction de l'état de la liaison (6) de données entre l'émetteur (2) et le récepteur (4), la règle (30) de sélection à utiliser,
- dans lequel, on effectue automatiquement, au moins en partie, le premier stade (22) de la sélection en deux stades,
- dans lequel, on effectue, du côté de l'émetteur, le premier stade (22) de la sélection en deux stades,
- dans lequel on transmet du récepteur (4) à l'émetteur (2), les plusieurs règles (26) de sélection avant la sélection (28) préalable du côté de l'émetteur.

2. Procédé suivant la revendication 1,
**caractérisé en ce que**
chacune des plusieurs règles (26) de sélection prescrit un procédé de sélection de données à transmettre dans les données pertinentes pour l'analyse, pour un type déterminé d'une analyse de données et pour un état déterminé de la liaison (6) de données entre l'émetteur (2) et le récepteur (4).

3. Procédé suivant la revendication 1 ou 2,
**caractérisé en ce que**
au moins une partie des plusieurs (26) de sélection est mise en mémoire du côté du récepteur.

4. Procédé suivant l'une des revendications précédentes,
**caractérisé en ce que**
l'état de liaison (6) de données entre l'émetteur (2) et le récepteur (4) comprend un taux de transmission, une vitesse de transmission et/ou une largeur de bande.

5. Procédé suivant l'une des revendications précédentes,
**caractérisé en ce que**
après le premier stade (22) de la sélection en deux stades, on met en mémoire, du côté du récepteur, la sélection (28) principale dans les plusieurs règles (26) de sélection et on effectue ensuite le deuxième stade (24) de la sélection en deux stades.

6. Procédé suivant l'une des revendications précédentes,
**caractérisé en ce que**
l'on effectue automatiquement, au moins en partie, le deuxième stade (24) de la sélection en deux stades.

7. Procédé suivant l'une des revendications précédentes,
**caractérisé en ce que**
l'on effectue, du côté du récepteur, le deuxième stade (24) de sélection en deux stades.

8. Procédé suivant l'une des revendications précédentes,
**caractérisé en ce que**
l'on transmet les données à transmettre en temps réel de l'émetteur (2) au récepteur (4).

9. Emetteur (2, de transmission de données pertinentes pour l'analyse à un récepteur (4), pour l'analyse de données, dans lequel des analyses de données peuvent être effectuées, dans lequel les données pertinentes pour l'analyse sont dans l'émetteur (2), **caractérisé en ce que**
l'émetteur (2) est conçu
- pour sélectionner les données à transmettre dans les données pertinentes pour l'analyse, conformément à une règle (30) de sélection à appliquer sur les données pertinentes pour l'analyse,
dans lequel, la règle (30) de sélection à utiliser pour une transmission de données a été choisie dans plusieurs règles (26), pouvant être données à l'avance, de sélection de données à transmettre dans les données pertinentes pour l'analyse, dans lequel la sélection de la règle (30) de sélection à utiliser pour cette transmission de données dépend d'une analyse de données prévue sur les données à transmettre et d'un état de la liaison (6) de données entre l'émetteur (2) et le récepteur (4), et
- pour transmettre au récepteur (4) les données à transmettre,
- pour sélectionner en deux stades la règle (30) de sélection à utiliser,
- dans lequel, dans le premier stade (22), on effectue, en fonction de l'analyse de données prévue sur les données à transmettre, une sélection (28) préalable dans les plusieurs règles (26) de données et
- dans le deuxième stade (24), on sélectionne, en fonction de l'état de la liaison (6) de données entre l'émetteur (2) et le récepteur (4), la règle (30) de sélection à utiliser dans la sélection (28) préalable,
- dans lequel, on effectue automatiquement, au moins en partie, le premier stade (22) de la sélection en deux stades,
- dans lequel, on effectue, du côté de l'émetteur, le premier stade (22) de la sélection en deux stades,
- dans lequel on transmet du récepteur (4) à l'émetteur (2), les plusieurs règles (26) de sélection avant la sélection (28) préalable du côté de l'émetteur.

10. Système, pour l'analyse de données, comprenant un émetteur (2) et un récepteur (4), pour la transmission de données pertinentes pour l'analyse de l'émetteur (2), dans laquelle il y a les données pertinentes pour l'analyse, à un récepteur (4), dans laquelle des analyses de données peuvent être effectuées, **caractérisé en ce que** le système est conçu pour
- pour une transmission de données, sélectionner pour la sélection de données à transmettre dans les données pertinentes pour l'analyse, parmi plusieurs règles (26) de sélection pouvant être données à l'avance, une règle (30) de sélection à utiliser sur les données pertinentes pour l'analyse,
dans lequel la sélection de la règle (30) de sélection à utiliser pour cette transmission de données dépend d'une analyse de données prévue sur les données à transmettre et d'un état de la liaison (6) de données entre l'émetteur (2) et le récepteur (4),
et l'émetteur (2) est constitué suivant la revendication 9.
